# DEMANDE DE BREVET EUROPEEN

(11) **EP 0 710 924 A1**
(43) Date de publication de la demande: **08.05.1996**
(21) Numéro de dépôt: 95402060.8
(22) Date de dépôt: 12.09.1995
(51) Int. Cl.: G06K 19/077

(54) **Carte électronique avec voyant de bon fonctionnement**

(30) Priorité: 16.09.1994 FR 19940011072
(71) Demandeur: THOMSON-CSF, F-75008 Paris (FR)
(72) Inventeur: Robin, Philippe, F-92402 Courbevoie Cedex (FR); Dubois, Jean-Claude, F-92402 Courbevoie Cedex (FR); Facoetti, Hugues, F-92402 Courbevoie Cedex (FR); Riguidel, Christian, F-92402 Courbevoie Cedex (FR); Paschal, Jean-Pierre, F-92402 Courbevoie Cedex (FR)
(74) Mandataire: Guérin, Michel, et al

(57) **Abrégé**

L'invention concerne une carte électronique équipée d'un voyant de bon fonctionnement comprenant une zone électrooptique, ledit voyant étant connecté à un circuit électronique de contrôle. Ce type de voyant peut être alimenté par piles ou cellules solaires.

Application : Identification et détection automatique d'objets (véhicules volés notamment).

## Description

Le domaine de l'invention est celui des cartes électroniques de plus en plus fréquemment utilisées.

Elle peuvent notamment comporter une mémoire permettant de stocker des informations que l'on pourra interroger à distance grâce à des dispositifs de réception et de transmission hyperfréquences, pouvant être intégrés à la carte.

C'est ainsi qu'un système pour l'identification et la détection automatique de véhicules ou d'objets et comportant une étiquette électronique a fait l'objet d'une demande de brevet français publiée sous le n° 2 691 813. Ce système permet d'interroger une étiquette électronique comportant des informations (il peut s'agir du numéro d'Identification "VIN" (Vehicle Identification Number), du numéro minéralogique d'une voiture) pouvant être directement comparées avec des données stockées sur fichier (notamment numéros d'Identification "VIN" et des numéros minéralogiques de véhicules volés).

Afin de s'assurer du bon fonctionnement d'une telle étiquette et plus généralement de cartes électroniques, il peut être intéressant d'équiper cette dernière d'un voyant de bon fonctionnement attestant notamment de la bonne connexion des différents composants, intégrés à l'étiquette.

Le propriétaire d'un véhicule qui appose, par collage sur le côté intérieur de son pare-brise une telle étiquette, sera en mesure de contrôler lui-même visuellement le bon fonctionnement de toute l'électronique et de vérifier qu'ainsi le véhicule sera effectivement détecté en cas de vol.

Utilisé dans un système de détection automatique de véhicules volés, le dispositif permet d'informer le propriétaire légitime que son étiquette hors service est à changer, et d'informer visuellement tout policier que le véhicule doit être contrôlé, soit parce que le véhicule n'est pas équipé, soit parce que l'étiquette est en panne.

Parallèlement à ce système utilisant une étiquette électronique, il existe déjà beaucoup de systèmes électroniques possédant des voyants lumineux qui permettent le contrôle visuel de bon fonctionnement.

Cependant, dans les dispositifs actuels plusieurs inconvénients sont à souligner :
- les voyants lumineux consomment de l'énergie et sont difficiles à utiliser sur des systèmes portables ;
- les voyants lumineux sont des composants individuels qu'il faut connecter sur le système, or leur encombrement ne permet pas de les incorporer dans des systèmes très fins du type carte de crédit à microprocesseur.

Dans ce contexte, l'invention propose un nouveau type de carte électronique équipée d'un voyant de bon fonctionnement original.

Plus précisément, il s'agit d'une carte électronique comprenant un circuit électronique de contrôle, caractérisée en ce qu'elle comprend connectés au circuit électronique de contrôle, un élément électrooptique servant de voyant de bon fonctionnement et une alimentation.

La carte électronique selon l'invention peut avantageusement comprendre des moyens de communication et en particulier par hyperfréquences, permettant de mémoriser des données et des programmes d'application de toutes natures.

L'alimentation de l'ensemble peut avantageusement être réalisée à l'aide de cellules solaires, supplées par une pile ou par une batterie, mais entraînant une consommation électrique moindre comparativement au voyant ne fonctionnant que par piles.

L'élément électrooptique peut avantageusement utiliser un cristal liquide dispersé dans un polymère et capable de passer d'un état diffusif à un état transparent, sous l'action d'un champ électrique.

La carte électronique, selon l'invention, peut également comprendre des moyens de fixation pour être apposée sur une surface transparente, notamment un pare-brise de véhicule.

Cette carte peut également avantageusement comprendre des éléments de fragilisation, entraînant sa destruction physique et logique lors d'une opération de décollement, afin d'éviter toute falsification pouvant consister par exemple à utiliser une carte de véhicule non appropriée.

L'invention sera mieux comprise et d'autres avantages apparaîtront à la lecture de la description qui va suivre et des figures annexées parmi lesquelles :
- la figure 1 schématise une carte électronique selon l'invention avec ces différents composants ;
- la figure 2 illustre un exemple de carte électronique selon l'invention ;
   * la figure 2a montre une vue en coupe
   * la figure 2b illustre une vue de dessous

La carte électronique selon l'invention peut être constituée d'un support plastique de type époxy tels que ceux utilisés dans les cartes type carte de crédit.

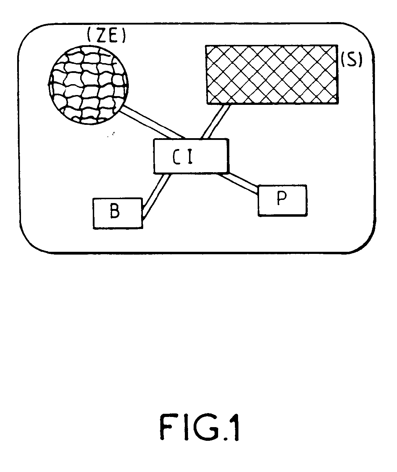

Les différents composants sont intégrés au niveau de ce support. A ce titre, la figure 1 schématise une carte selon l'invention. Un élément ou zone électrooptique (ZE) est connectée électriquement à un circuit électronique (CI), alimenté d'une part par des cellules solaires (S), d'autre part par une pile (P), une batterie (B) étant également connectée audit circuit (CI).

La zone électrooptique peut avantageusement être une pastille de film de cristal liquide dispersé dans un polymère (PDLC), ce film étant inséré entre deux électrodes de commande. De manière générale, les PDLC peuvent former des films minces faisant typiquement une dizaine de microns. En l'absence de tension électrique, les films sont diffusifs car l'orientation des zones de cristal liquide est aléatoire. Sous champ électrique appliqué (une dizaine de volts) grâce à des électrodes transparentes de type ITO (oxyde d'indium et d'étain), toutes les zones cristal liquide s'orientent et le matériau devient transparent dans la direction du vecteur champ. Il s'agit d'un effet électrodiffusif, les détails sur leur préparation et leur mode de fonctionnement sont fournis dans l'article "Liquid Crystals Applications and Uses" pages 361-395, J.W. DOANE, edited by B. BAHADUR, World Scientific.

A l'endroit où est située la cellule (PDLC), le support peut être réflecteur ou être percé pour être transparent. Dans le cas d'une zone réflectrice, celle-ci peut être définie de plusieurs manières : il peut s'agir d'une métallisation de façon à obtenir un effet miroir. Il peut également s'agir du collage d'un hologramme qui sera invisible lorsque le PDLC sera dans son état diffusant. Il peut encore s'agir du collage d'un film de matériau réflecteur qui renvoie les faisceaux lumineux dans leurs directions incidentes lorsque le PDLC est dans son état transparent.

Le bon fonctionnement de la carte électronique est observé visuellement sous une lumière grâce au voyant PDLC, et à titre d'exemple :
- si ce voyant est alternativement opaque puis transparent de façon rythmée, de façon à laisser la zone située sous le PDLC, réfléchir la lumière, alors le circuit est opérationnel,
- si ce circuit est opaque de façon permanente de jour, alors le circuit est hors service.

Plus précisément, la carte électronique selon l'invention peut comporter un circuit intégré comportant de façon connue, une mémoire morte programmable, couplée à un dispositif d'émission/réception relié à une antenne. L'alimentation de ce circuit est assurée par un ensemble de cellules solaires (éléments de silicium) complété par une pile.

Lorsque la carte électronique selon l'invention est destinée à être utilisée dans un système pour l'identification de véhicules et la détection automatique de véhicules volés, par exemple, des moyens de fixation de ladite carte sur le pare-brise peuvent également être prévus.

Dans ce type d'application, il peut être intéressant pour utiliser au maximum la surface de la carte, type carte de crédit, d'intégrer à l'antenne, la cellule PDLC et les cellules solaires côté pare-brise, les autres composants étant intégrés sur la face arrière, ladite carte étant accolée à l'intérieur de la voiture, sur le pare-brise.

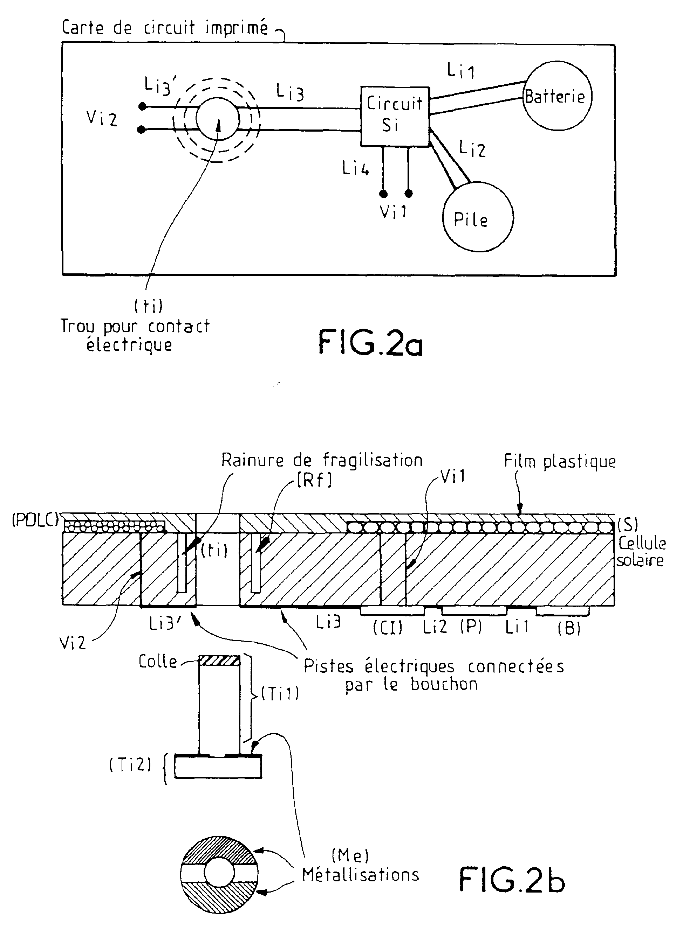

La figure 2 illustre à cet égard un exemple de carte électronique, destinée à être collée sur un élément transparent type pare-brise. La figure 2a schématise une vue de dessous de la carte, avec les éléments, circuit électronique en silicium (CI), la batterie (B) et la pile (P) étant reliées aux circuits par des pistes conductrices Lᵢ₁ et Lᵢ₂.

Des pistes conductrices Lᵢ₃ et L_{'i3}, connectées au circuit (CI) sont également réalisées au niveau de la surface pour assurer par l'intermédiaire de via conducteurs Vᵢ₂ la connexion électrique avec la cellule (PDLC). Ces lignes conductrices sont interrompues et seul un élément conducteur rapporté peut en assurer la continuité. En effet, pour assurer la fixation de cette carte des trous cylindriques (ti) sont prévus dans le sens de l'épaisseur comme représentés en figures 2a et 2b ; trous dans lesquels on introduit des éléments de fixation composés de deux tronçons (Tᵢ₁) et (Tᵢ₂), (Tᵢ₁) ayant un diamètre d₁ égal à celui du trou, (Tᵢ₂) ayant un diamètre d₂ supérieur.

Ces éléments comportent un embout avec de la colle qui sera appliquée côté pare-brise, et donc au niveau du tronçon (Tᵢ₁). Le tronçon (Tᵢ₂) comporte quant à lui des métallisations (Me) en périphérie de manière à assurer le contact électrique entre les pistes conductrices Lᵢ₃ et L'ᵢ₃, lorsque l'élément de contact est introduit dans la perforation de la carte, prévue à cet effet. Ainsi après fixation de la carte à l'endroit désiré (notamment le pare-brise), le voyant de bon fonctionnement (matérialisé par l'élément PDLC) est en mesure de fonctionner.

Afin de perfectionner ce type de carte électronique, des rainures de fragilisation (Rf) peuvent également être réalisées dans le sens de l'épaisseur de la carte. Ces nervures permettent ainsi lors du décollage de la carte, la destruction des pistes conductrices qui relient les différents éléments, empêchant par là-même l'usage multiple d'une même carte sur différents véhicules.

L'usage d'une telle carte peut ainsi avantageusement être introduit dans :
- un système pour l'identification et la détection automatique de véhicules volés ou d'objets comprenant, dans chaque véhicule ou objet identifiable la carte électronique, fixée sur un élément transparent du véhicule (pare-brise) ou de l'objet identifiable et à l'extérieur de chaque véhicule ou objet, au moins un lecteur mobile déplaçable à volonté à proximité de véhicules ou d'objets identifiables comportant :
   * une mémoire d'enregistrement d'un fichier de codes d'identification d'objets ou de véhicules à identifier ;
   * des moyens hyperfréquences d'interrogations simultanées des cartes pour provoquer la transmission de l'ensemble des codes d'identification des véhicules ou objets ;
   * des moyens de comparaison des codes d'identification contenus dans le fichier avec ceux transmis par les cartes ;
   * et des moyens de signalisation pour signaler de façon immédiate la présence de véhicules dont les codes d'identification correspondent à ceux mémorisés dans le fichier.
- toute carte électronique utilisable dans les domaines bancaires et des services (cartes à microprocesseur, carte de téléphone ...) ;
- tout dispositif électronique portable ou embarqué sur véhicule ;
- tout badge permettant un paiement ou un accès "main libre" comme les badges de télépéage, les cartes d'accès avec lecture sans contact.

## Revendications

1. Carte électronique comprenant un circuit électronique de contrôle, **caractérisée en ce qu'**elle comprend connectés au circuit électronique de contrôle, un élément électrooptique servant de voyant de bon fonctionnement et une alimentation.

2. Carte électronique selon la revendication 1, **caractérisée en ce que** l'élément électrooptique est une cellule comprenant du cristal liquide dispersé dans du polymère.

3. Carte électronique selon l'une des revendications 1 ou 2, **caractérisée en ce que** l'élément électrooptique est placé devant une zone transparente de la carte, pour laisser passer la lumière visible.

4. Carte électronique selon l'une des revendications 1 à 2, **caractérisée en ce que** la carte comprend une zone réflectrice type miroir, catadioptre sur laquelle est placé l'élément électrooptique.

5. Carte électronique selon l'une des revendications 1 à 4, **caractérisée en ce qu'**elle comprend des moyens de communication pour recevoir, mémoriser et transmettre des données.

6. Carte électronique selon la revendication 5, **caractérisée en ce que** les moyens de réception et de transmission sont des moyens hyperfréquences.

7. Carte électronique selon l'une des revendications 1 à 6, **caractérisée en ce que** l'alimentation du circuit électronique est assurée par des cellules solaires et/ou une pile et/ou une batterie.

8. Carte électronique selon l'une des revendications 1 à 7, **caractérisée en ce que** les composants sont intégrés sur une carte plastique, type carte de crédit.

9. Carte électronique selon la revendication 8, **caractérisée en ce que** la carte comprend un dispositif de fixation sur une surface plane ou peu bombée.

10. Carte électronique selon la revendication 9, **caractérisé en ce que** la carte présente localement des trous dans lesquels sont incorporés des éléments de fixation possédant des embouts collant.

11. Carte électronique selon l'une des revendications 9 ou 10, **caractérisée en ce que** l'élément électrooptique et des cellules solaires sont intégrées sur une des faces de la carte, le circuit électronique et l'alimentation dudit circuit étant intégrés sur l'autre face, des pistes électriques assurant la continuité entre le circuit électronique et l'élément électrooptique dans des plans parallèles au plan de la carte et selon des axes perpendiculaires auxdits plans.

12. Carte électronique selon les revendications 10 ou 11, **caractérisée en ce que** les éléments de fixation sont composés de deux éléments cylindriques (Tᵢ₁) et (Tᵢ₂) respectivement de diamètre d₁ et d₂, d₁ étant sensiblement égal à la largeur des trous, d₂ étant supérieur à cette largeur, l'élément (Tᵢ₁) présentant un embout collant situé dans le plan des composants élément électrooptique, cellules solaires et une longueur égale à l'épaisseur de la carte, l'élément (Tᵢ₂) présentant en périphérie des métallisations permettant la connexion électrique entre des pistes électriques reliées à des composants situés sur les deux faces.

13. Carte électronique selon l'une des revendications 8 à 12, **caractérisée en ce qu'**elle comprend des rainures de fragilisation associées à des pistes conductrices qui relient les différents éléments.

14. Système pour l'identification et la détection automatique de véhicules ou d'objets **caractérisé en ce qu'**il comprend :
* dans chaque véhicule ou objet identifiable une carte électronique telle que celle de l'une des revendications 9 à 13, fixée sur un élément transparent du véhicule (pare-brise) ou de l'objet identifiable
* et à l'extérieur de chaque véhicule ou objet, au moins un lecteur mobile déplaçable à volonté à proximité de véhicules ou d'objets identifiables comportant :
- une mémoire d'enregistrement d'un fichier de codes d'identifications d'objets ou de véhicules à identifier
- des moyens hyperfréquences d'interrogations simultanées des cartes pour provoquer la transmission de l'ensemble des codes d'identification des véhicules ou objets
- des moyens de comparaison des codes d'identification contenus dans le fichier avec ceux transmis par les cartes
- et des moyens de signalisation pour signaler de façon immédiate la présence de véhicules dont les codes d'identification correspondent à ceux mémorisés dans le fichier.
